Europäisches Patentamt

European Patent Office

Office européen des brevets

(11) Publication number: **0 224 338 B1**

# EUROPEAN PATENT SPECIFICATION

(45) Date of publication of patent specification: **10.04.91**   (51) Int. Cl.5: **A23F 5/26, A23F 5/50**

(21) Application number: **86308390.3**

(22) Date of filing: **28.10.86**

(54) Process for the recovery of volatile constituents from coffee during extraction.

(30) Priority: **13.11.85 GB 8528012**

(43) Date of publication of application:
**03.06.87 Bulletin 87/23**

(45) Publication of the grant of the patent:
**10.04.91 Bulletin 91/15**

(84) Designated Contracting States:
**AT BE CH DE ES FR GB GR IT LI LU NL SE**

(56) References cited:
**DE-A- 2 000 315**
**FR-A- 2 126 170**
**FR-A- 2 347 074**

(73) Proprietor: **GENERAL FOODS LIMITED**

**Banbury Oxfordshire, OX16 7QU(GB)**

(72) Inventor: **Lascelles, Le Gay John**
**2 Old Vicarage Gardens**
**Cropedy Nr. Banbury Oxon(GB)**
Inventor: **Rowan, William**
**c/o General Foods Corp. 250 North Street**
**White Plains, N.Y. 10625(US)**

(74) Representative: **Allard, Susan Joyce et al**
**BOULT, WADE & TENNANT, 27 Furnival**
**Street**
**London EC4A 1PQ(GB)**

Rank Xerox (UK) Business Services

## Description

The present invention relates to a process for the recovery of volatile constituents from coffee during extraction and, in particular to a process for the recovery of the medium-heavy volatile compounds which are generated during extraction. The recovered volatile coffee constituents may then be added to a coffee extract, prior to drying, in order to enhance the flavour of the soluble coffee product so-obtained.

The problem of preparing soluble coffee products which resemble a home-brewed roast and ground coffee in flavour and aroma characteristics is well known. The preparation of commercial soluble coffee products comprising extracting soluble solids from coffee and then drying the resultant extract to a powder normally involves processing techniques which tend to degrade the flavourful coffee constituents which characterise freshly brewed roast and ground coffee. Processes such as dilute extraction, low temperature spray-drying and freeze-drying, which are designed to retain a large number of volatile constituents from the coffee, have met with varying degrees of success. Such processes, however, generally also involve increased costs.

Various processes have been described for improving the extraction of coffee from roast and ground coffee. For example British Patent Specification No. 1537205 describes a process for extracting coffee in group of cells by passing extraction liquid through cells in series, firstly through the "hot" and later through the "cold" cells, the "hot" cells containing the most exhausted coffee and the "cold" cells the least exhausted coffee, the extract being at least partially evaporated between the "hot" and the "cold" cells and extraction liquid being added at the same stage between cells to the partially evaporated extract in a quantity at least equal to the quantity of evaporated liquid.

FR-A-2347074 is directed to a "hot" and "cold" process for extracting coffee in a group of cells by passing extraction liquid through cells in series, firstly through the "hot" and later through the "cold" cells, the "hot" cells containing the most exhausted coffee and the "cold" cells the least exhausted coffee. The extract is at least partially evaporated between the "hot" and the "cold" cells and extraction liquid is added at the same stage between the cells to the partially evaporated extract in a quantity at least equal to the quantity of the evaporated liquid.

We have now developed a process for the recovery of medium-heavy volatile coffee constituents during extraction of roast and ground coffee.

Accordingly, the present invention provides a process for the production of a soluble coffee product, which process comprises the steps of

i) subjecting roast and ground coffee to extraction with an extraction liquid to extract soluble components therefrom;

ii) continuously or intermittently passing the coffee extract obtained from an extraction column which is other than the final column of a set of extraction columns to a flash stripping vessel whereby the volatile constituents are flashed therefrom;

iii) condensing the flashed vapours to produce a flavour and/or aroma enhancing constituent;

iv) passing non-condensible constituents of the vapour stream to a scrubber and absorbing the said non-condensible constituents into water;

v) passing the stripped coffee extract from step (ii) through at least one further extraction column thereby to obtain a coffee extract;

vi) adding the condensate, or a part of the condensate, from step (iii) and the liquid offtake from the scrubber of step (iv) to the coffee extract from step (v) prior to drying; and

(vii) drying the enhanced coffee extract in order to produce a soluble coffee product.

As used herein the term "roast and ground coffee" is meant to include both a single variety and a blend of coffee varieties and both natural and decaffeinated coffees.

The terms "aroma" and "flavour" are used to describe the extracted volatile constituent which, when added to a soluble coffee product, may contribute a flavour and/or an aroma to the product. In many cases the constituent will contribute both flavour and aroma to the product.

Typical extraction processes which may be used include semi-continuous counter-current multi-stage extraction and continuous counter-current extraction. Commercial processes generally involve the semi-continuous, counter-current extraction of soluble coffee components from roast and ground coffee contained in a series of extraction columns. The extraction columns contain coffee of varying degrees of extraction, or depletion of soluble components. The extraction liquid is generally water which is fed first to the extraction column containing the most extracted coffee and the extraction liquid then flows through the columns containing coffee of a progressively lesser degree of extraction. The liquid is then drawn off as a coffee extract from the final extraction column in the set which generally contains the least extracted coffee, typically fresh unextracted roast and ground coffee. Extract concentrations are typically in the range of from 10 to 30% by weight solids.

Typically, a set of extraction columns may comprise five or six columns with the flash stripping taking place between the penultimate and the final columns. It is usual for the extraction liquid which is passed through the series of columns to initially be at a temperature of from 170° to 190°C and for the extraction columns to be operated at an elevated pressure.

For the sake of convenience it will be assumed hereinafter that the flash stripping vessel is located between the penultimate and final extraction columns in the series.

It will be understood that all of the coffee extract leaving the penultimate extraction column may be passed to the flash stripping vessel or only a portion of the said coffee extract may be treated in this way. It may also be advantageous to pass the coffee extract leaving the penultimate column intermittently to the flash stripper, the said extract which is not subjected to flash stripping being passed directly to the final column.

The coffee extract leaving the penultimate extraction column is generally at an elevated temperature and is therefore first passed to an inter column cooler where it is cooled before being passed to the flash stripping vessel. The coffee extract is still, however maintained at an elevated pressure, for example a pressure of 115 psia, and is generally passed to the flash stripping vessel through a back pressure valve. The flash stripping vessel is preferably maintained at atmospheric pressure.

The coffee extract flashes upon entry into the flash stripping vessel and the vapours are then condensed, for example in a vertical shell and tube condenser maintained at the pressure of the flash stripping vessel.

The condensed vapour stream may be further treated, if desired, in a distillation column to separate the various components therefrom. For example, volatile acids may be removed in the bottom fractions thereby leaving top fractions containing the preferred flavour and/or aroma enhancing compounds. This product may be added to the coffee extract before drying, for example by spray drying to produce a soluble coffee product. This product may also be used to impart a coffee flavour to non-coffee flavoured foodstuffs.

Constituents of the vapour stream which do not condense are then passed to a gas scrubber where they are absorbed into water preferably at a temperature of less than 10°C. The gas scrubber operates with recycling water, a portion of which is taken off and fresh make-up water added in the same amount. For example a scrubber may operate with a recycled volume of 100 to 1000 1 of water, the offtake from which would be about 3 1 per hour. An alternative method of scrubbing the non-condensible volatile stream is to absorb the stream into fresh water and feed this stream into a distillation column together with the condensed volatile stream. The offtake from the scrubber operating with recycled water is also added to the coffee extract before drying, in order to enhance the flavour of the coffee product.

The coffee extract which has been subjected to flash stripping is passed through a final extraction column in the series for example at a temperature in the range of from 75 to 120°C and in this case the temperature will be in the range of from 75 to 105°C. The final extraction column may be operated at atmospheric pressure. The coffee extract which emerges from this final column may be passed to a plate cooler where it is cooled to a temperature of about 25°C prior to the next processing stage or prior to storage in a hold tank. Alternatively, this coffee extract may be subjected to further processing to remove volatile constituents therefrom, for example by being subjected to a further flash stripping.

The addition of the condensate produced in step (iii) and the liquid offtake produced in step (iv) to the coffee extract from step (v) may be effected by conventional mixing techniques, whilst the drying of the enhanced coffee extract in step (vi) may be carried out by freeze drying or low temperature spray drying, which techniques are well known in the art. If desired, the extract may be concentrated, for example by evaporation, before drying.

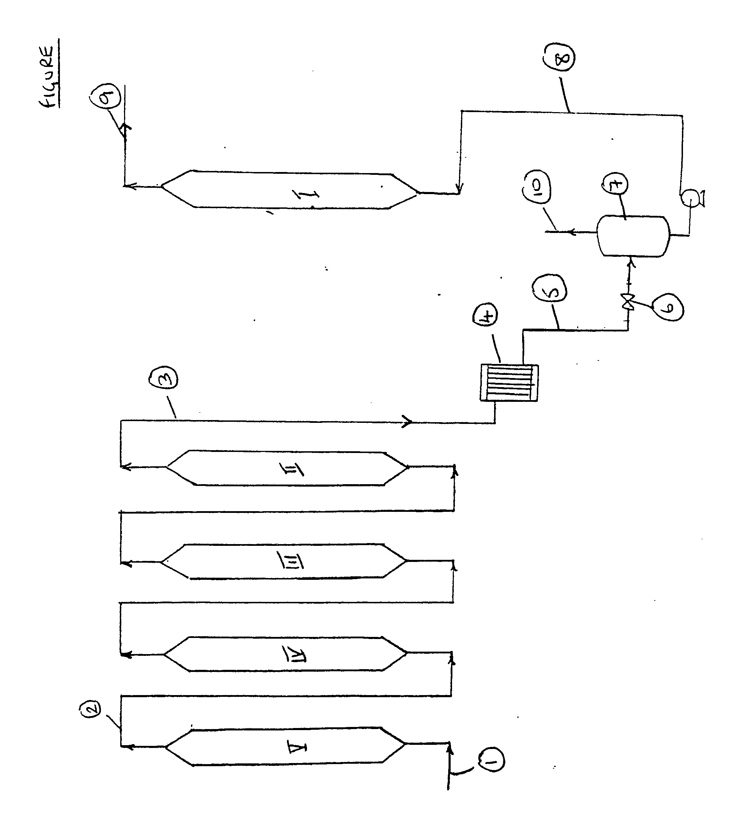

The process of the present invention will be further described with reference to the accompanying Figure of the drawings.

Referring to the drawing, a set of extraction columns I, II, III, IV and V is placed in series. An extraction liquid at an elevated temperature of about 180°C is passed along line 1 to the bottom of column V. The extraction liquid emerges from the top of column V and is then passed to the bottom of column IV. This procedure is repeated until an enriched extraction liquid containing soluble coffee compounds exits from the top of column II along line 3. This enriched extraction liquid at an elevated temperature and a pressure of 115 psia is then passed to an intercolumn cooler 4 where it is cooled to a temperature of from 85 to 145°C. The cool enriched extraction liquid is then passed along line 5 via back pressure valve 6 to the flash stripper vessel 7. The flash stripper is maintained at atmospheric pressure and upon entering the flash stripper 7, the volatile components are flashed from the liquid. The stripped coffee extract is then passed from the flash stripping vessel 7 via line 8 to the bottom of the final extraction column I in the series which contains fresh, unextracted, roast and ground coffee. This final extract column is operated at atmospheric pressure. An enriched coffee extract emerges from the top of the extraction column I along line 9. The flashed vapours, together with any non-condensible gases, emerge from the flash stripper 7 along line 10 and are passed to a vertical tube and shell condenser (not shown) which is operated at the pressure of the vessel. The condensate from the condenser may optionally be subjected to fractionation or distillation to remove unwanted compounds therefrom. The non-condensible vapours from the tube and shell condenser are passed to a scrubber maintained at atmospheric pressure and the gases are scrubbed counter-currently with water at a temperature of below 10°C. The liquid offtake from the scrubber, together with the condensate from the condenser are then added to a coffee extract and the enhanced coffee extract, optionally after concentration, is then dried by conventional means, such as low-temperature spray-drying or freeze-drying in order to produce a soluble coffee product.

The present invention is further illustrated by the following Examples.

EXAMPLE 1

687 Kg/hr of a coffee extract was fed at a temperature of about 180°C (depending upon the stage of the draw) and a pressure of about 115 psia from the penultimate extraction column in a series of extraction columns to an intercolumn cooler where it was cooled to a temperature in the range of from 90 to 125°C. The cooled coffee extract was then passed through a back-pressure valve into a flash stripping vessel having a diameter of 75 centimetres and a height of 100 centimetres. The flash stripping vessel was maintained at atmospheric pressure. The flashed vapour and any non-condensible gases were partially condensed in a vertical tube and shell condenser.

The stripped coffee extract was then pumped out of the vessel and fed to the bottom of a final extraction column of the series which contained fresh, unextracted, roast and ground coffee. The stripped extract was at a temperature of about 100°C.

The non-condensible vapours from the tube and shell condenser were passed through an absorption column which was maintained at atmospheric pressure. The gases were scrubbed counter-currently with water at a temperature of below 10°C.

42 l/hr of volatile constituents were condensed in the condenser. The condensed vapours stream was fed to a distillation column with a feed to distillate concentration ratio of 20:1. The distillate, together with the liquid offtake from the scrubber, was added to the coffee extract before it was spray-dried to produce a soluble coffee product.

Consumer tests have shown a requirement for a high impact but smooth and rounded instant coffee flavour in a soluble coffee product. It has been found that the process of the present invention, by allowing the recovery of more heavy/medium volatile constituents, provides a product having a much improved balance between high impact and harshness.

EXAMPLE 2

522 Kg/hr of coffee extract was fed from the penultimate extraction column in a series of extraction columns to a intercolumn cooler where it was cooled to a temperature in the range of from 90 to 125°C. The cooled extract was then passed via a back pressure valve to a flash stripping vessel, 75 centimetres in diameter and 100 centimetres high held under atmospheric pressure by venting through the condenser into an atmospheric scrubber. The flashed vapour and any non-condensible gases were partially condensed in a vertical shell tube heat exchanger.

The stripped extract was pumped out of the flash vessel and fed to the fresh final extraction column of the series at 100°C. The extract was then evaporated to about 60% solids concentration.

The non-condensible vapours from the condenser were passed through an absorption column which was at atmospheric pressure. The gasses were scrubbed counter-currently with water at a temperature of below 10°C.

24 l/hr of volatiles were condensed in the condenser (= 4%, strip). The condensed volatiles, together with the liquid offtake from the scrubber which contains absorbed volatiles were fed to a distillation column with a feed to distillate concentration ratio of 20:1. The distillate was added back to the concentrated coffee extract (ex evaporation) in the correct stoichiometric ratio and spray dried to produce a soluble coffee product.

The spray dried product was evaluated for flavour. It was found to have an increased cup strength and to exhibit a darker roasted character as compared to a sample in which the stripped volatile constituents were not added thereto.

Claims

1. A process for the production of a soluble coffee product, which process comprises the steps of

    i) subjecting roast and ground coffee to extraction with an extraction liquid to extract soluble components therefrom;

    ii) continuously or intermittently passing the coffee extract obtained from an extraction column which is other than the final column of a set of extraction columns to a flash stripping vessel whereby the volatile constituents are flashed therefrom;

iii) condensing the flashed vapours to produce a flavour and/or aroma enhancing constituent;

iv) passing non-condensible constituents of the vapour stream to a scrubber and absorbing the said non-condensible constituents into water;

v) passing the stripped coffee extract from step (ii) through at least one further extraction column thereby to obtain a coffee extract;

vi) adding the condensate, or a part of the condensate, from step (iii) and the liquid offtake from the scrubber of step (iv) to the coffee extract from step (v) prior to drying; and

(vii) drying the enhanced coffee extract in order to produce a soluble coffee product.

2. A process as claimed in claim 1 wherein the extraction process is a semi-continuous, counter-current extraction process.

3. A process as claimed in claim 1 or claim 2 wherein the flash stripping takes place between the penultimate and the final extraction columns in the series.

4. A process as claimed in any one of the preceding claims wherein the extraction liquid which is passed through the series of columns is initially at a temperature in the range of from 170° to 190°C.

5. A process as claimed in any one of the preceding claims wherein the flash stripping vessel is operated at atmospheric pressure.

6. A process as claimed in any one of the preceding claims wherein the volatile stream is condensed in a condenser maintained at the pressure of the flash stripping vessel.

7. A process as claimed in any one of the preceding claims wherein the coffee extract which has been subjected to flash stripping is passed through a final extraction column at a temperature in the range of from 75 to 105°C and at atmospheric pressure.

8. A process as claimed in any one of the preceding claims wherein the extract from step (vi) is concentrated prior to drying.

9. A process as claimed in any one of the preceding claims wherein the extract from step (vi) is dried by freeze drying or low temperature spray drying.

**Revendications**

1. Procédé pour fabriquer un produit en forme de café soluble, ce procédé incluant les étapes consistant à

i) soumettre du café grillé et moulu à une extraction en utilisant un liquide d'extraction de manière à en extraire des constituants solubles;

ii) transférer d'une manière continue ou intermittente l'extrait de café obtenu depuis une colonne d'extraction, qui est différente de la colonne finale d'un ensemble de colonnes d'extraction, à une enceinte d'épuration par vaporisation flash, ce qui provoque l'extraction, par vaporisation flash, des constituants volatils à partir de l'extrait de café;

iii) condenser les vapeurs produites par vaporisation flash pour obtenir un constituant rehaussant la saveur et/ou l'arôme;

iv) envoyer des constituants non condensables du courant de vapeur à un épurateur et absorber lesdits constituants non condensables, dans l'eau;

v) faire passer l'extrait de café épuré obtenu lors de l'étape ii) à travers au moins une autre colonne d'extraction de manière à obtenir un extrait de café;

vi) ajouter le condensat ou une partie du condensat obtenu lors de l'étape iii) et le liquide sortant de l'épurateur lors de l'étape (iv) à l'extrait de café obtenu lors de l'étape (v) avant son séchage; et

vii) faire sécher l'extrait de café concentré de manière à produire un produit en forme de café soluble.

2. Procédé selon la revendication 1, selon lequel le procédé d'extraction est un procédé semi-continu d'extraction à contre-courant.

3. Procédé selon la revendication 1 ou 2, selon lequel l'épuration par vaporisation flash s'effectue entre l'avant-dernière colonne d'extraction et la dernière colonne d'extraction de la série.

4. Procédé selon l'une quelconque des revendications précédentes, selon lequel le liquide d'extraction, qui traverse la série de colonnes, possède initialement une température dans la gamme allant de 170° à 190°C.

5. Procédé selon l'une quelconque des revendications précédentes, selon lequel l'enceinte d'épuration par vaporisation flash fonctionne à la pression atmosphérique.

6. Procédé selon l'une quelconque des revendications précédentes, selon lequel le courant de substances volatiles est condensé dans un condenseur maintenu à la pression de l'enceinte d'épuration par vaporisation flash.

7. Procédé selon l'une quelconque des revendications précédentes, selon lequel on fait passer l'extrait de café, qui a été soumis à l'épuration par vaporisation flash, dans une colonne finale d'extraction à une température située dans la gamme allant de 75 à 105°C et à la pression atmosphérique.

8. Procédé selon l'une quelconque des revendications précédentes, selon lequel on concentre l'extrait obtenu lors de l'étape (vi), avant son séchage.

9. Procédé selon l'une quelconque des revendications précédentes, selon lequel on sèche l'extrait obtenu lors de l'étape (vi), avant la lyophilisation ou le séchage par pulvérisation à basse température.

**Ansprüche**

1. Verfahren für die Herstellung eines löslichen Kaffeeprodukts, wobei das Verfahren die Schritte umfaßt

    i) Extrahieren von geröstetem und gemahlenem Kaffee mit einer Extraktionsflüssigkeit, um lösliche Bestandteile daraus zu extrahieren;

    ii) kontinuierliches oder diskontinuierliches Leiten des Kaffee-Extrakts, der aus einer Extraktionssäule gewonnen wird, welche nicht die letzte Säule eines Satzes von Extraktionssäulen ist, in eine Flash-Verdampfungskammer, wobei die flüchtigen Bestandteile davon verdampft werden;

    iii) Kondensieren der verdampften Dämpfe, um einen Geschmack und/oder Aroma verbessernden Bestandteil zu erzeugen;

    iv) Leiten von nicht kondensierbaren Bestandteilen des Dampfstroms zu einem Wascher und Absorbieren der nicht kondensierbaren Bestandteile in Wasser;

    v) Leiten des ausgedämpften Kaffee-Extrakts aus Schritt (ii) durch mindestens eine weitere Extraktionssäule, wobei ein Kaffe-Extrakt erhalten wird;

    vi) Zufügen des Kondensats oder eines Teils des Kondensats aus Schritt (iii) und der flüssigen Entnahme aus dem Wascher von Schritt (iv) zum Kaffee-Extrakt aus Schritt (v) vor dem Trocknen; und

    vii) Trocknen des verbesserten Kaffee-Extrakts, um ein lösliches Kaffeeprodukt zu erzeugen.

2. Verfahren nach Anspruch 1, worin das Extraktionsverfahren ein semikontinuierliches Gegenstrom-Extraktionsverfahren ist.

3. Verfahren nach Anspruch 1 oder 2, worin das FlashVerdampfen zwischen den vorletzten und den letzten Extraktionssäulen in der Reihe stattfindet.

4. Verfahren nach einem der vorhergehenden Ansprüche, worin die Extraktionsflüssigkeit, die durch die Reihe von Säulen geleitet wird, anfänglich bei einer Temperatur im Bereich von 170° bis 190°C ist.

5. Verfahren nach einem der vorhergehenden Ansprüche, worin die Flash-Verdampfungskammer bei atmosphärischem Druck betrieben wird.

6. Verfahren nach einem der vorhergehenden Ansprüche, worin der flüchtige Strom in einem Kühler kondensiert wird, der beim Druck der Flash-Verdampfungskammer gehalten wird.

7. Verfahren nach einem der vorhergehenden Ansprüche, worin der Kaffee-Extrakt, der einem Flash-Verdampfen unterworfen worden ist, durch eine letzte Extraktionssäule bei einer Temperatur im Bereich von 75 bis 105°C und bei atmosphärischem Druck geleitet wird.

8. Verfahren nach einem der vorhergehenden Ansprüche, worin der Extrakt aus Schritt (vi) vor dem Trocknen konzentriert wird.

9. Verfahren nach einem der vorhergehenden Ansprüche, worin der Extrakt aus Schritt (vi) durch Gefriertrocknen oder Sprühtrocknen bei tiefer Temperatur getrocknet wird.

FIGURE